# EUROPEAN PATENT SPECIFICATION

(11) **EP 2 208 333 B1**
(45) Date of publication and mention of the grant of the patent: **19.10.2011**
(21) Application number: 08845707.2
(22) Date of filing: 24.10.2008
(51) Int. Cl.: H04L 29/06, H04L 12/24, H04L 12/56, G06F 9/445

(54) **MOBILE RADIO TERMINAL DEVICE HAVING A FILTER MEANS AND A NETWORK ELEMENT FOR THE CONFIGURATION OF THE FILTER MEANS**
MOBILES FUNKENDGERÄT MIT EINEM FILTERMITTEL UND EINEM NETZWERKELEMENT ZUR KONFIGURATION DES FILTERMITTELS
DISPOSITIF DE TERMINAL RADIO MOBILE AYANT UN MOYEN DE FILTRAGE ET ÉLÉMENT DE RÉSEAU POUR LA CONFIGURATION DU MOYEN DE FILTRAGE

(30) Priority: 31.10.2007 DE 102007052128
(43) Date of publication of application: 21.07.2010
(73) Proprietor: concept 04 GmbH, 65462 Ginsheim-Gustavsberg (DE)
(72) Inventor: GELDERMANN, Martin, 63589 Linsengericht (DE); JUNG, Peter, 47051 Duisburg (DE); BRUCK, Guido, 46562 Voerde (DE)
(74) Representative: Zinkler, Franz
(86) International application number: PCT/EP2008/009032
(87) International publication number: WO 2009/056261

(56) References cited:
- WO-A-00/69120
- WO-A-2006/045343

## Description

The present invention relates to the protection of mobile radio networks and mobile radio terminal devices, in particular when the mobile radio terminal devices move in several networks.

In today's and also in future information society it may be assumed, that telecommunications will have the role of a key technology, which meanwhile represents a substantial economic factor. Through the internet new forms of electronic communications were widely distributed. Special challenges are changed conditions regarding data protection, see Brockhaus, Die Enzyklopädie, in 30 volumes, 21st edition, F.A. Brockhaus, Leipzig, Mannheim, 2005-07.

A security problem in connection with communication networks always results when differently trusted networks, i.e. one provider of one network does not trust the security of another network, are physically connected to each other. In principle there is the possibility then that users of the less trusted network endanger the trustworthiness, integrity and availability of data stored or transmitted in the trusted network, see Bundesamt für Sicherheit in der Informationstechnik (BSI): Konzeption von Sicherheitsgateways (Federal Agency for Security in Information Technology: Conception of Security Gateways), Version 1.0, Bonn, April 2006.

For example, measures for shielding a local network against access from outside are referred to as a security gateway or a firewall. Usually firewalls are also used for monitoring the data traffic from a local into an external network. This term is today used in particular for protective measures in an intranet against possibly dangerous data transmissions from the internet, e.g. access by hackers or transmission of viruses, see above Brockhaus.

Measures for fighting security-relevant weak points in IT communities are, for example, also examined by the Federal Agency for Security in Information Technology (BSI), a federal agency in the scope of business of the federal interior ministry (BMI; Bundesministerium des Inneren). By publications like the IT basic protection catalogue (IT-Grundschutz-Katalog) the BSI issues recommendations how to fight security-relevant weak points in IT-communities. The IT-basic protection catalogue is also a basis for certifying the IT basic protection of a company. The recommendations published by the BSI also contain generally accepted instructions for the conception of security gateways (firewalls), see above Federal Agency for Security in Information Technology (BSI): Conception of Security Gateways.

Basically, it is one of the tasks of the operating system of a computer to guarantee the privacy, integrity and availability of data stored on the computer. Due to their complexity, operating systems, however, often comprise undetected security flaws. It is, for example, one approach of a firewall to keep the functions of individual firewall components as simple and clear as possible in order to minimize the danger of undetected security flaws.

There are different realizations of firewalls which may generally consist of hardware and software components. It is to be noted, that the security guaranteed by a firewall not necessarily results only from one single component, a packet filter or an application gateway, but from the cooperation of the components participating in the firewall and the concept behind the same. This concept may be of different extensions. In order to clarify the basics of the used firewall concepts, in the following, two realizations of firewalls are presented exemplarily.

One simple firewall may, for example, consist of a packet filter, which separates an internal network from the internet and allows communication between the computers of the internal network and the internet only restrictedly. The restrictions of communication are described by filter rules using which the packet filter is configured. By means of the filter rules the packet filter checks for every data packet sent, whether the data packet is to be passed on to the addressed receiver or is to be discarded. An address of the sender, an address of the receiver, a port number, a used service, a used communication protocol etc. may count among the criteria.

More extensive firewalls may divide an internal network into subnetworks having different security stages or security guidelines. Different subnetworks may then be divided by rooters, which for example take over packet filter tasks. The communication between the subnetworks may then be controlled by the intermediate rooters and be limited to selected computers. Communication with the internet may be restricted to only few computers. The same may function as application gateways and are often separated both from the internet and also from the subnetworks of the internal network by further packet filters. Data to be exchanged between the internal network and the internet may e.g. be latched onto an application gateway and be checked there.

In order to meet the security requirements of a company a well thought-out firewall concept is important. Both conception and also maintenance of a firewall are e.g. tasks for a system administrator. He may, for example, configure rooters and gateways involved in the firewall.

For private users who often only have individual computers the use of so-called personal firewalls may be less effort and thus preferable. A personal firewall is a software which may take over firewall functions and runs on the computer to be protected. It controls incoming and outgoing data packets of an individual computer. Such a firewall realization is generally less secure than a concept in which firewall functions are taken over by separate devices which are separate from the computers to be protected. Additionally, the use of personal firewalls is less practical in a company network. The personal firewall is configured by the user of the respective computer. Firewall components individually configured by individual users only fit into a firewall concept restrictedly, however, which is to be designed and maintained by the system administrator.

Due to the increasing prevalence of mobile communication devices new problems for the security of company networks result. Mobile communication devices are among others pocket PCs (PC = personal computer), smart phones and PDAs (personal digital assistants). These devices may comprise a small computer having an operating system on which a great bandwidth of programs may run. Due to the extensive prevalence of these devices and/or the operating systems there is the danger that the programs may contain a harmful code. Due to the fact that these devices generally also have several possibilities or interfaces to communicate with other devices or networks, there is an increasing danger that such a harmful code may enter a mobile communications system.

One characteristic of mobile communication devices is their mobility. Thus, they are not in a fixed place and are not always connected to the same network. Instead, such devices are on the user. To use all possibilities of such devices they also have to contact other networks apart from the home network, for example in hotels or hotspots (e.g. internet access at airports, stations, etc.). Here, there is always the danger that harmful code may enter the mobile device. Without further security measures such a code may enter an otherwise secure network, like e.g. a company network, when the infected device logs into this network. It may here also be located behind the firewall, which monitors the access of the network, for example, to the internet.

As the mobile communication devices not necessarily exclusively communicate with a sufficiently secured network, security flaws result which are especially based on the characteristics of mobile devices, in particular, as security measures of a network not always extend to the mobile device. The use of security measures on the mobile communication device itself, the above-mentioned personal firewalls, have significant disadvantages, however, like for example that they are impracticable with regard to security concepts of companies.

Personal firewalls are independent of each other, i.e. each user of such a personal firewall may adapt and configure the firewall on his device according to his requirements. This means, that each firewall may be configured differently. By inattentiveness or ignorance of the users, this way despite the use of firewall solutions substantial flaws or gaps in the security concept of the company network may result. A uniform security structure and putting through the same is practically impossible. Also changes of security politics in a network are extremely cost and time consuming using conventional solution, in particular when many mobile devices exist.

Conventional personal firewalls monitor the TCP/IP traffic (TCP = transmission control protocol, IP = internet protocol). Thus, they offer a certain security for this field. Security flaws result here, however, with regard to the further existing communication possibilities and also with regard to additional functions of terminal devices which may also be security-relevant. Personal firewalls thus have the disadvantage, that they comprise immense security flaws in particular with regard to communication possibilities which do not use TCP/IP.

Further communication possibilities for example also include short range communication protocols like Bluetooth. This radio protocol may be configured so that it enables any connection requests to the mobile communication device without asking the user for permission or informing him. Regarding security aspects, this possibility is to be classified as very dangerous. One available possibility to completely prevent this problem is to switch off Bluetooth. This way, however, also Bluetooth headsets (wireless hands-free telephones) may not be used anymore, for example.

A further feature of many mobile phones or mobile radio terminal devices are built-in small cameras. In sensitive areas cameras of any type are not allowed. Due to the high prevalence of mobile phones including cameras this may not always be put through. Also with company phones the camera may generally not always be switched off, so that security flaws may result also from peripheral devices, like e.g. cameras, voice recognition etc. of mobile radio terminal devices.

WO 2006/045343 A1 provides a concept for securing a communication between, for example, a SIM-application and a central network node. A security policy manager device is utilized, which is adapted to manage multiple network security devices. The security policy manager provides security policies, which are then distributed to the respective network security devices.

WO 00/69120 provides a concept for configuring network security devices, where the configuration originates from a central node. They also provide a method utilizing multiple encryption keys and authentication of network nodes. The manager device can distribute the security policy to multiple network security devices, for example, through a supervisor device associated with the multiple network security devices. In other words, a hierarchical distribution structure may be implemented.

EP 1313290 B1 provides a concept for implementing a personal firewall. A computer device is provided with a local security mechanism, i.e. the personal firewall, for protecting the computer device from attacks from a foreign network. The configuration of the personal firewall is carried out when the computer device is connected to a home network. The personal firewall is provided with different sets of security rules, which are different for the home network and for foreign networks.

It is the object of the present invention to provide an improved concept for protecting mobile radio networks and mobile radio terminal devices.

This object is achieved by a mobile radio terminal device according to claim 1, a method for monitoring data packets according to claim 7, a network element according to claim 8, a method for the configuration of a filter means of a mobile radio terminal device according to claim 13 and a mobile radio system according to claim 15.

The basic idea of the present invention is a filter means, which may be referred to as a firewall, which is located on a mobile radio terminal device and may be configured from another network element. The other or central network element, which is in the following also referred to as a security manager, may here be located in a home network, so that a mobile radio terminal device may be accordingly configured in its home network and is thus also sufficiently protected in visited networks. A secure communication coupling between mobile communication devices, i.e. mobile radio terminal devices, and a network, i.e. network elements, may be achieved by a filter means or a firewall. In particular for mobile radio terminal devices, which are subject to special risks due to their manifold communication possibilities and their mobility, a special protection may be offered by embodiments. In one network element, for example via security manager means or a security manager, installation specifications or configuration specifications for filter means may be generated, which are located and/or to be generated on the mobile radio terminal devices.

In embodiments, the filter means may be realized both in hardware and also in software, wherein the same monitor and control the incoming and outgoing data packets of the mobile radio terminal device. Further, embodiments may additionally offer the possibility to manage peripheral devices of the mobile radio terminal device, i.e., e.g. to monitor or to activate or to deactivate, respectively, further functions of the mobile radio terminal device.

In one embodiment, the filter specifications for the filter means may only be configured or changed by a certain network element having a security manager means or a security manager, respectively, i.e. a filter configuration means. To achieve this, embodiments may encrypt the transmission of configuration files between the filter configuration means and the filter means, for example by the digital signature algorithm method (DSA). The network element or the filter configuration means, respectively, may here comprise tools for managing the filter regulations or installation regulations, respectively.

Embodiments thus offer the advantage to be able to centrally manage mobile filter means. Here, embodiments may guarantee that mobile radio terminal devices of a company network may for example only be configured by an expert and thus security gaps based on the ignorance or negligence of a user of a mobile radio terminal device may be prevented. Embodiments may offer the advantage, that a simple involvement of existing further communication and security solutions is possible. Further, embodiments may offer the possibility of an extensive device management, i.e. a management of the peripheral devices of mobile communication devices in favor of an increased security. In this special case this may mean that, for example within the scope of a subnetwork, camera functions of mobile radio terminal devices are switched off. A further advantage of embodiments may be to enable a seamless introduction of mobile communication devices into an overall security concept, for example of a company. Security gaps which resulted from mobile radio terminal devices, which have contact to visited networks due to their mobility, may thus be excluded efficiently.

Embodiments may offer the possibility for a controlled cutoff of communication networks having different privacy stages, in particular, if at least in one internal subnetwork mobile communication devices like pocket PCs, smart phones and PDAs are used. Embodiments may allow to protect the mobile devices in the internal network by a firewall, which may on the one hand be centrally configured by a system administrator, which is on the other hand also effective, however, when the mobile devices temporarily leave the internal network. Conversely, subnetworks of the internal network having a higher privacy stage may be protected from mobile devices having a lower privacy stage.

On the one hand, embodiments may offer the advantage of effectively integrating mobile devices into the firewall concept of a company network without security gaps resulting, on the other hand, the special mobile utilizability of the mobile communication devices only hardly has to be limited.

In embodiments, a communication of any mobile device in a network may be controlled by one filter means each. The same may be a variant of a personal firewall. In contrast to conventional personal firewalls, a graphical user interface of the existing filter means may allow no or only a restricted individual configuration by the user, however. The configuration may instead be performed with the help of a security manager from a network element by the system administrator.

The advantages of the embodiments are a central management of mobile filter means, a simple involvement of existing further communication and security solutions, an extensive device management of mobile communication devices in favor of an increased security and a seamless involvement of mobile communication devices into the overall security concept of a company.

In the following, embodiments of the present invention are explained in more detail with reference to the accompanying figures, in which:
Fig. 1 shows an embodiment of a mobile radio terminal device;
Fig. 2 shows an embodiment of a network element; and
Fig. 3 shows an embodiment of a mobile radio system.

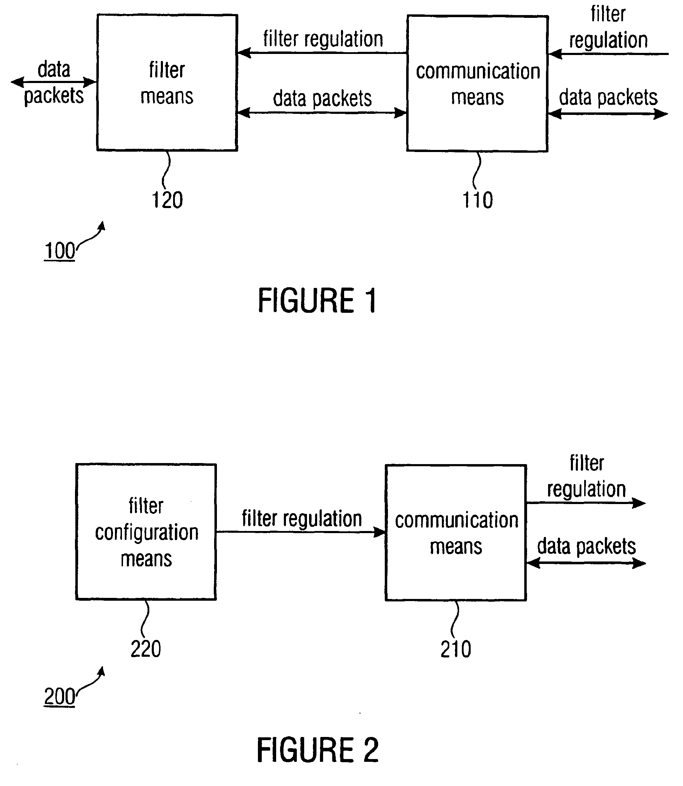

Fig. 1 shows a mobile radio terminal device 100 having a communication means 110 for communicating with network elements via data packets, and a filter means 120 for monitoring the data packets, wherein the filter means 120 is implemented to receive a filter specification from a first network element and to suppress a communication with a second network element when a data packet for the communication with the second network element does not comply with the filter specification.

The communication means 110 may here be implemented to communicate with the network elements via any interface, whether wire-bonded or wireless, or via any transmission protocols, respectively. For example, the mobile radio terminal device 100 could communicate with the first network element, which here represents a kind of security manager, in order to obtain new filter specifications and/or regulations, for example, from a company network. In embodiments it is possible here that a connection to this security manager is only possible in a wire-bonded way for security reasons. For example, a user of such a mobile radio terminal device 100 might put down the same in the area of his company network in a holder or a docking station, so that then a wire-bonded connection results. In embodiments, connections to the first network element may only be via certain connections in order to make communications with the mobile radio terminal device 100 especially secure. In other embodiments, the connection to the security manager, i.e. the first network element, may, however, also be wireless or via any interfaces or protocols.

In embodiments, the filter means 120 may have the function of a firewall, for example the functionality of a personal firewall which may, however, be configured from the network, i.e. the first network element or the security manager. The term configuration here should mean that at least new filter regulations may be sent from the network to the filter means. In other embodiments, in which a software implementation of the filter means 120 is provided, there may also be the possibility that the complete filter means may be changed via installation regulations. Thus, for example, also filter functions for new interfaces or protocols may be added.

The filter means 120 may thus be implemented to function as a firewall or security gateway with regard to the data packets. This is indicated in Fig. 1 by the fact that all data packets which may be received by the communication means 120 pass through the filter means 120. Depending on the filter regulation, data packets may then be differentiated by the filter means 120 using different criteria and may be treated differently. In particular, data packets may be discarded, which would cause the prevention of a communication with another network element, if the data packets which are used within the scope of this communication do not correspond to the filter regulation.

Filter regulations may contain many rules which, for example, indicate which data packets are to be regarded as allowable and which are unallowable. Also finer differentiations are possible, so that data packets having certain characteristics may only be received by certain network elements or be sent to the same, respectively. The filter means 120 may, for example, also monitor those data packets which are exchanged with the first network element or the security manager. E.g., data packets containing filter regulations may only be exchanged with the first network element or the security manager, and the first network element or the security manager may here, for example, be identified using an address (IP address, MAC address (MAC = medium access control), etc.

In further embodiments, the mobile radio terminal device 100 may further comprise a control means, which is coupled to the filter means 120 and the communication means 110, and which is implemented to further receive an installation regulation from the first network element and to adapt the filter means 120 based on the installation regulation. As already mentioned above, the filter means 120 may be realized in software. It may, for example, be the case that a system administrator of a company network wants to change the filter means 120 on the mobile radio terminal devices 100 belonging to the company. The control means in the mobile radio terminal device 100 may then allow to update or reinstall such a filter means software 120, respectively. The control means may, for example, be realized by a processor or a microprocessor.

In order to monitor the security flaws in the communication between the mobile radio terminal device 100 and the security manager, the communication means 110 may further be implemented in embodiments to receive encrypted installation or filter regulations, respectively, from the first network element (security manager), wherein the control means may then be implemented to decrypt the encrypted installation regulations or filter regulations, respectively, and to provide decrypted filter regulations to the filter means 120 or to adapt the filter means 120 based on decrypted installation regulations, respectively. In general, here any decryption methods and mechanisms may be used. In one embodiment, for example, the DSA method may be used. The same would enable the mobile radio terminal device 100 to identify the first network element using a signature or to validate received filter regulations or installation regulations using a digital signature, respectively.

Any rules regarding data packets may be present in the filter regulations. In the filter regulations, for example, allowed transmitter addresses, receiver addresses, port numbers, used services or also used communication protocols may be indicated, wherein the data packets may be checked regarding this information by the filter means 120. Further, it may be possible in embodiments that the communication means 110 is implemented to communicate with network elements of different subnetworks. It is, for example, possible that a company network is divided into different subnetworks having different security requirements. In such embodiments it may be the case that the filter means 120 is implemented to receive different filter regulations for different subnetworks and accordingly treats the data packets differently for a communication with the different subnetworks. It is, for example, possible that in the area of conference rooms only certain data services or data connections, respectively, are allowed, other connections or services are blocked, however, which may be allowed again outside these rooms.

It may also be the case in embodiments, that the filter means 120 is implemented in hardware. In such an embodiment, the mobile radio terminal device 100 for realizing the filter means 120 may comprise a first processing unit and at least a second processing unit for example for realizing an application. The division of an application from the filter means 120 in hardware may bring additional advantages regarding the achieved security. In one embodiment it would thus be possible for the filter means 120 to be able to realize an application firewall with regard to the application. The application may then exchange data packets only via the filter means 120, i.e. via a separate processing unit. Mobile radio terminal devices 100 may occur in different realizations, for example pocket PCs, smart phones, laptop computers or PDAs, etc.

Mobile radio terminal devices 100 may further communicate via a plurality of interfaces or protocols, like for example TCP (transmission control protocol), IP (internet protocol), UTPD (universal datagram protocol), GSM (global system for mobile communications), WLAN (wireless local area network), DECT (digital enhanced cordless telephone), UMTS (universal mobile telecommunication system), etc. In all of those systems or protocols, respectively, characteristic data packets are used, using the characteristics of which the corresponding data packets in embodiments may be treated differently within the scope of the filter specification.

Further, in particular modern mobile radio terminal devices 100 comprise peripheral devices or peripheral interfaces, respectively. For example, these infrared interfaces or Bluetooth interfaces may comprise cameras, interfaces for charging devices, docking stations, etc. In order to close security gaps occurring with regard to these peripheral devices or interfaces, embodiments may further comprise filter means 120 which are implemented to monitor a use of those peripheral devices or interfaces. In one embodiment it would, for example, be possible to switch off the camera function of a mobile radio telephone in the area of certain networks.

In other embodiments, it would for example also be possible to temporarily switch off a transmission antenna of a mobile radio terminal device 100 during the starting and landing phase of an airplane to prevent interferences also here. One such embodiment relates to the differentiation of different subnetworks which was already described above. Subnetworks within an airplane might for example comprise a certain identifier, using which a certain filter regulation may perform measures for preventing transmission. Further, in the field of security-critical laboratories a subnetwork may comprise an identifier using which the filter means 120 switches off a camera or also the function of a dictaphone or voice recording, respectively.

It may be provided that the control means performs an authentication using the first network element, for example a security manager, and thus guarantees that possibly to be transmitted filter regulations or installation regulations indeed come from the authorized network element. If such an authentication fails, the control means or the mobile radio terminal device 100, respectively, may be implemented to neither accept filter regulations nor installation regulations.

Mobile radio terminal devices 100 may further comprise an interface for the communication with a user or administrator, respectively, wherein an administrator may be identifiable via an administrator password and the filter means 120 may be implemented to be activated or deactivated by the administrator. Further, mobile radio terminal devices may include interfaces for representing at least a part of the filter regulation for the user of the mobile radio terminal device 100. The user would thus have the possibility to look at the filter regulations which may possibly be helpful in situations in which a certain service is refused or admitted, respectively. It may be the case in embodiments that the user is only able to receive information but not to change the filter regulation.

In a further embodiment it would be possible that the mobile radio terminal device 100 demand updates of the filter regulation from time to time. For example, an administrator of a company network may arrange that mobile radio terminal devices 100 whose home network is the company network regularly get in touch to demand updates. A user who is outside the company network may then be informed via the interface for illustration that a connection to the company network is to be built up. This may for example be done by tunnel mechanisms, e.g. using IPSEC (IP secure). In another embodiment, the mobile radio terminal device might also built up a dedicated, possibly encrypted mobile radio connection with the home network. Another possibility would for example be that the company network in such a case, i.e. in case that updates are present, sends a message to the mobile radio terminal device 100, whereupon a connection for transmitting a new filter regulation is built up.

In embodiments, such a mechanism is also possible for virus detectors, wherein the filter means 120 may then additionally obtain a virus filter regulation which may protect the mobile radio terminal device 100 from viruses. In further embodiments, a mobile radio terminal device 100 may further comprise a virus filter means which is implemented to receive a virus filter regulation from the first network element, i.e. the security manager. In other embodiments, the virus filter means may also be updated via other mechanisms or also by other network elements. For transmitting the filter regulation from the first network element to the mobile radio terminal device, different data formats are possible. For example, the filter means 120 may be implemented to receive a filter regulation in an XML-format (XML = extensible markup language). Installation regulations may for example be transmitted in a CAB format (CAB = cabinet).

Fig. 2 shows an embodiment of a network element 200 which is implemented for the configuration of a filter means 120 of a mobile radio terminal device 100. The network element 200 comprises a communication means 210 for the communication with the mobile radio terminal device 100 via data packets. Further, the network element 200 includes a filter configuration means 220 for providing a filter regulation such that the filter means 120 may identify data packets which do not correspond to the filter regulation based on the filter regulation, wherein the communication means 210 is implemented to transmit the filter regulation via the data packets to the mobile radio terminal device 100.

According to the above description, the network element 200 corresponds to the first network element from which the mobile radio terminal device 100 receives the filter regulation. The network element 200 may further comprise an interface for communicating with an administrator. The administrator may then for example act with the filter configuration means 220 so that corresponding updates for filter regulation are provided. The filter configuration means 220 may be implemented to provide the filter regulation for a filter means 120, which may realize a firewall or a security gateway. According to the already above-described embodiments, the filter configuration means 220 may also be implemented to provide an installation regulation for a filter means 120 on the basis of which a software filter means may be installed in a mobile radio terminal device 100.

In order to protect the communication between the network element 200 and a mobile radio terminal device 100, the network element may further comprise a means for encrypting the data packets. It may be the case in further embodiments of the network element 200, that the same comprises a database for storing filter regulations, installation regulations or keys which may, for example, offer additional functionalities regarding an update history of a certain mobile radio terminal device to a user or a system administrator. Regarding file formats embodiments are flexible, for example, the network element 200 may be arranged to provide the filter regulations as an XML file and the installation regulations as a CAB file.

The filter regulations may provide a plurality of filter rules which contain information regarding transmitter addresses, receiver addresses, port numbers, used services, used protocols, interfaces, peripheral devices, etc. (see above), and respective filter rules or regulations which enable a filter means 120 to deal with the data packets in a corresponding way. Here, data packets of any protocols or transmission interfaces may be monitored.

The filter configuration means 220 and the means for encrypting may further be implemented in embodiments, such that they generate a key pair with an installation regulation or a filter regulation and sign the installation regulation or the filter regulation using the key pair. As already explained above, this contributes to the protection of the transmission of the filter regulation or the installation regulation, respectively. In embodiments, the digital signature may also serve to identify or authenticate, respectively, the network elements 200. For example, the DSA method may be used here. In further embodiments, the network element 200 may further comprise a virus filter configuration means for providing a virus filter regulation, wherein the communication means 210 may then be implemented to transmit the virus filter regulation via the data packets to the mobile radio terminal device 100.

Embodiments may also be realized in a system comprising a security manager (network element 200) and filter means 120 on mobile communication devices 100. For example, also every mobile radio terminal device 100 may comprise a filter means 120. One filter means 120 each may control the data exchange from the mobile device 100 with the network in which the mobile device is currently located. The rules according to which the data exchange of a mobile device 100 may be controlled by a filter means 120 may be centrally configured with the help of the security manager by a system administrator of a company network or an internal network, respectively.

When the mobile device 100 is located in the internal network, the filter means 120 may fulfill the function of a packet filter, which is part of the firewall of the internal network. The filter means 120 may for example be configured only with the security manager. The security manager may thus allow an effective conceptual design and maintenance of the firewall of the internal network which the filter means is part of.

When the mobile device 100 is located outside the internal network, the filter means 120 may fulfill the function of a personal firewall, if applicable with the restriction, that the user does not have the possibility to change the configuration of the filter means.

As a special variance of a personal firewall for mobile devices 100 the filter means 120 may be implemented in software. The software of a filter means 120 may also be generated by the security manager (network element 200). After the installation of the software of a filter means 120 on a mobile device 100, the configuration of the filter means 120 is further controlled by the security manager and may be changed. It may be guaranteed that only the security manager may manipulate the configuration of the filter means generated by the security manager.

Apart from the actual filter function, the filter means 120 may also control further functions of the mobile communication device 100. This may be further communication possibilities like, for example, Bluetooth, but may also include device functions like the built-in camera.

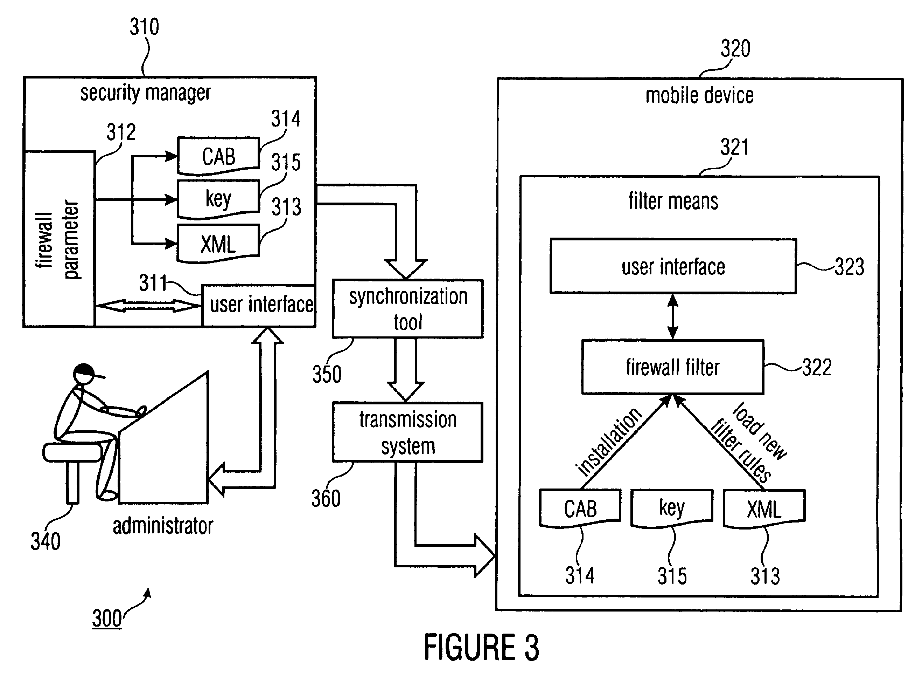

Fig. 3 shows, how the filter rules of a filter means 321 may be centrally controlled by an administrator with the help of a security manager or network element 310, respectively. Both security manager 310 and also filter means 321 again consist of several components, which are explained in more detail in the following.

Fig. 3 shows an overview of a system 300 which comprises a security manager 310 and a mobile device 320. The security manager 310 is here located in one embodiment of an above-described network element 200. The mobile device 320 corresponds to an embodiment of a mobile radio terminal device 100 of the above description. The security manager 310 comprises an interface 311 via which an interaction with the administrator 340 is possible. The interface 311 of the security manager 310 is also designated by GUI (graphical user interface) in Fig. 3. In principle, however, any interfaces with an administrator 340 are possible. Via the interface 311 the administrator may influence firewall parameters, which are, for example, provided in a filter configuration means 312. Based on the interaction with the administrator 340, the filter configuration means 312 may generate filter regulations 313, which are, for example, present in an XML file format, installation regulations 314 which may, for example, be present in a CAB format and keys 315, which may serve for the encryption or signature, respectively, of the filter regulation 313 or the installation regulation 314.

In Fig. 3, further a synchronization tool 350 may be seen, which may optionally be present to realize an automatic update of filter means 321 in mobile devices 320. Further, Fig. 3 shows a simplified transmission system 360, which is located between the security manager 310 and the mobile device 320. In embodiments, any transmission systems 360 may be used in order to realize a communication between the security manager 310 and the mobile device 320. The above-described communication means are then adapted accordingly.

In the mobile device 320, the filter means 321 is located, which contains installation regulations 314 for example in the form of CAB files, filter regulations 313 for example in the form of XML files, and which comprises keys 315 for the decryption or validation/authentication. Both, on the side of the security manager 310 and also on the side of the mobile device 320, the reference numeral 315 was given to the key in Fig. 3. This should not indicate that the same key is to be present on both sides. As, for example according to the above-described methods, key pairs may be generated, i.e. e.g. pairs of public and private key, the mobile device 320 would be able to check a digital signature and decrypt encrypted data packets, respectively. In order to indicate that the respective keys have to be in a certain relation to each other, the same reference numeral was given on both sides.

The filter means 321 comprises a firewall filter 322 which may in turn cooperate with a graphical surface or interface 323, respectively, such that a user of the mobile device 320 might have access to a possible filter regulation. As already described above, the interface 322 only serves for information purposes, a user should not or at least only very restrictedly be able to make changes on filter regulations, as this function is to be reserved for the system administrator 340.

The security manager 310 in the embodiment of Fig. 3 comprises a database which manages firewall parameters and keys 315, a GUI 311 which allows a user to access the configuration database and a generic part which generates installation files for filter means 321, configuration files and keys. The left side of Fig. 3 shows a realization of the security manager 310. An installation file generated by the security manager 310 is illustrated in Fig. 3 by the CAB file. A configuration file is illustrated by the XML file.

Filter rules and profiles of the filter means 321 belong to the administrated or managed firewall parameters, respectively. A filter rule may contain a rule which indicates what a firewall has to do with a data package which fulfills certain criteria. A firewall generally follows a great number of filter rules. The profile of a filter means 321 may include a certain set of filter rules which have to be followed by the filter means 321. Via the GUI 311 of the security manager 310 both elementary filter rules and also profiles of filter means 321 may be accessed or looked at, respectively, managed and edited. E.g., also a history function which records the changes of the firewall parameters may belong to the management tools of the security manager 310.

For each of the filter means 321 to be managed by the security manager 310 the security manager 310 may generate an installation file which allows the installation of the filter means 321 on the mobile device 320. Together with each installation file a key pair may be generated, which may be used for a signature of the firewall configuration.

By this it may be guaranteed in the embodiments, that a filter means 321 accepts only filter configurations of the responsible security manager 310 who generated the filter means 321. When the configuration of a filter means 321 is to be changed, the security manager 310 may generate a configuration file which contains the new configuration. The configuration file may be signed by the security manager 310. For this purpose, e.g. the digital signature algorithm method (DSA method) is used. With the help of this method the filter means 321 checks whether the configuration file available for the filter means 321 was generated by the responsible security manager 310.

The security manager 310 is a central means or network element, respectively, via which the complete security concept of a company may be implemented and managed. This central function requires a special protection from attacks from outside. Because of the fact that the security manager 310 is accommodated at a central location it is more simple to protect the same effectively against attacks than with a distributed system, which offers accordingly more possibilities for an attack.

In one embodiment, the security manager 310 is realized in software. The filter means 321 is that part of the security concept which is responsible for the direct security of the mobile terminal device 320. This part may take over the firewall functions for all communication paths available for the mobile terminal device 320 and additionally the function of the device management. The device management allows to monitor, control and switch on and off individual functions of the mobile communication device 320.

The filter means 321 on the mobile terminal devices 320 operate autonomically. This means, they fulfill their functions without having a connection to the home network, for example the company network. This also means, however, that the user of the mobile communication device 320 may have no access to the filter means 321, or in other embodiments only a very limited access, respectively. It may be possible that it may neither activate nor deactivate the means 321 nor change the configuration of the filter means 321 or even uninstall the same. By this it may be guaranteed, that the security politics of the company network is adhered to under all circumstances.

It is also possible in embodiments that it may be required to enter a predetermined password to remove the filter means 321 again from the mobile communication device 320. Thus, the removal is possible in such embodiments, but only by authorized users which know the password. That will generally be administrators of the company network.

The filter means 321 may also perform an extensive device management apart from its actual filter function. This may be monitoring all security-relevant functions of the terminal device. In particular, all communication paths available to the mobile communication device 320 belong to the same, like for example Bluetooth. Here, the connection setup to other Bluetooth devices may be monitored and limited. For example, this way the connection to a certain headset which may be used may be allowed while all other connections are prevented.

Via the function of the device management, also further functions of the mobile communication device 320 may be monitored. This may, for example, be the camera which is available in many smart phones today.

In order to inform the user at least about the work of the filter means 321 an answer possibility may exist. The same may generally be implemented in software and comprise a graphical user interface. By this it is possible to give status information or access to the current configuration of the filter means 321 to the user. This may be helpful for the identification of problems in situ. However, this interface does not or only restrictively allow the user to perform changes on the configuration of the filter means 321.

In order to enable an extensive security solution, apart from the firewall functionality and the device management also an antivirus solution may be integrated into embodiments. For the realization of the antivirus solution also third party providers, like for example Sophos, may be used. The configuration of this antivirus solution may here take place locally on the mobile terminal device 320, it may, however, also be realized via a central network element. For this purpose, for example, the above-mentioned graphical user interface may be used.

The realization of the filter means 321 may generally be performed in software, wherein, however, also pure hardware solutions are possible. In.this case, the generation of the CAB files may be omitted as only the configuration files are required. The right side of Fig. 3 shows a filter means 321 in a mobile device 320.

To transmit the configurations generated by the security manager 310 to the mobile devices 320, embodiments may provide the use of already existing tools of third party providers. This may, for example, be a communication system 360, for example WLAN, and a synchronization program 350, for example Intellisync or amagu_sync.

These tools may be integrated without problems into an overall system of security manager 310 and filter means 321 in a mobile radio terminal device 320. Thus it is possible to flexibly integrate the system into already existing company networks. If a corresponding software, like for example ActiveSync, is already integrated and configured in such networks, this existing solution may be directly taken over. It may then also be possible that no further adjustments in possibly also existing firewalls are necessary anymore. In case that such a synchronization solution does not yet exist any desired solution may be integrated here.

The communication between the security manager 310 and the filter means 321 may e.g. take place in the form of XML files (extensible markup language) and installation files. The XML files may contain information for the actual profiles, while the installation files may serve for the installation of the firewall program on the devices.

With every change of a setting of the security manager 310 these files may be newly generated. The installation files may be present in the form of so-called CAB files (CAB = cabinet). The CAB files generated by the security manager 310 may be compressed file archives which may contain also the current configuration apart from the software of the filter means 321. If no filter means 321 are yet installed on the mobile terminal device 320, the CAB installation files may be transmitted to the terminal device 320 either via the used synchronization software or manually and may be directly installed. If an installed filter means 321 is already located on the mobile terminal device 320, the installation files do not necessarily have to be transmitted. In this case it may be sufficient to transmit an XML file and accordingly adapt the settings.

In order to guarantee, that the transmitted settings of an XML file were not corrupted during transmission, these data may be digitally signed. For this, the digital signature algorithm method (DSA) may be used. Using the same the receiver, in this case a filter means 321 on a mobile device 320 may detect, whether the received file was transmitted without corruptions. In embodiments, this may also be taken over by a control means according to the above description, which accordingly interacts with the filter means 321. In embodiments, only in case that checking the signature leads to a positive result, the settings contained in the XML file may be taken over. Otherwise, a corresponding message may be indicated to the security manager 320 via the used synchronization software.

For the mobile terminal device 320 to be able to check the signature, it needs, for example, the public key of the security manager 310. This key may be transmitted once to the mobile terminal device 320. This may, for example, take place together with the transmission of the installation file. Subsequently, the terminal device may use this key to check the digital signature. As this key is public there is no necessity to transmit the key on an especially secure way.

In embodiments the filter regulation may comprise a configuration which contains rules according to which the data packets may be classified into allowable and non-allowable data packets. The communication means (110) can be implemented to receive encrypted installation or filter regulations from the first network element and the control means may be implemented to decrypt the encrypted installation regulations or filter regulations to provide decrypted filter regulations to the filter means (120) or to adapt the filter means (120) based on decrypted installation regulations, respectively. The control means can be implemented to decrypt the encrypted installation regulation or the encrypted filter regulation according to a DSA method (DSA = digital signature algorithm). The filter means (120) can be implemented to obtain information about allowed transmitter addresses, receiver addresses, port numbers, used services or used communication protocols with the filter regulation and check the data packets with regard to this information.

In embodiments the mobile radio terminal device (100) may comprise a first processing unit for realizing the filter means (120) and at least one second processing unit for realizing an application, wherein the application is implemented to exchange data packets via the filter means (120) and the communication means (110) with a network element. The filter means (120) can be implemented to monitor data packets according to Bluetooth, TCP (TCP = Transmission Control Protocol), IP (IP = Internet Protocol), UDP (UDP = Universal Datagram Protocol), GSM (GSM = Global System for Mobile communications), WLAN (WLAN = Wireless Local Area Network), DECT (DECT = Digital Enhanced Cordless Telephone), UMTS (UMTS = Universal Mobile Telecommunication System), LTE (LTE = Long Term Evolution).

The control means can be implemented to further perform an authentication with the first network element and to accept neither installation regulations nor filter regulations for the first network element with a failed authentication. The mobile radio terminal device (100) may further comprise an interface for communicating with an administrator, wherein the administrator may be identified via an administrator password, and wherein the filter means (120) is implemented to be activated or deactivated by the administrator. The mobile radio terminal device (100) may further include an interface for representing at least a part of the filter regulation for a user of the mobile radio terminal device (100).

The mobile radio terminal device (100) can further comprise a virus filter means for monitoring data packets based on a virus filter regulation. The virus filter means can be implemented to receive a virus filter regulation from the first network element. The filter means (120) may be implemented to receive a filter regulation in an XML-format (XML = extensible markup language). The control unit can be implemented to receive an installation regulation in a CAB format (CAB = cabinet).

In embodiments the network element (200) may comprise the filter configuration means (220) being implemented to provide an installation regulation for a filter means on the basis of which a software filter means may be installed in a mobile radio terminal device. The network element (200) may comprise a means for encrypting the data packets. The network element (200) may manage a database for storing filter regulations, installation regulations or keys. The filter configuration means (220) can be implemented to provide an XML file as a filter regulation. The filter configuration means (220) can be implemented to provide a CAB file as an installation regulation. The filter configuration means (220) can be implemented to provide filter regulations for Bluetooth, TCP, IP, UDP, GSM, WLAN, DECT, UMTS, LTE data packets. The database can be implemented to store a history of filter regulations, installation regulations or keys for a mobile radio terminal device.

The means for encrypting and the filter configuration means (220) can be implemented to generate a key pair with an installation regulation or a filter regulation and to sign or to encrypt, respectively, the installation regulation or the filter regulation with the key pair. The means for encrypting can be implemented to encrypt or to sign, respectively, according to the DSA method. The network element (200) may further comprise a virus filter configuration means for providing a virus filter regulation, and the communication means (210) may be implemented to transmit the virus filter regulation via the data packets to the mobile radio terminal device.

Embodiments may comprise a mobile radio terminal device (100), comprising a communication means (110) for communicating with network elements via data packets anda control means which is implemented to perform an authentication with a first network element. The embodiments may further comprise a filter means (120) for monitoring the data packets, wherein the filter means (120) is implemented to receive a filter regulation from the first network element and to prevent a communication with a second network element, when a data packet for communicating with the second network element does not correspond to the filter regulation; wherein the control means is implemented to accept no filter regulations from the first network element in a failed authentication; and wherein the mobile radio device (100) further comprises a peripheral device or a further interface for a communication, and wherein the filter means (120) is implemented to monitor a use of the peripheral device or the further interface based on the filter regulation.

The filter means (120) may be implemented to form a firewall or a security gateway for the data packets. The filter regulation may comprise a configuration which contains rules according to which the data packets may be classified into allowable and non-allowable data packets. The control means can be implemented to receive an installation regulation from the first network element and to adapt the filter means (120) based on the installation regulation. The communication means (110) can be implemented to receive encrypted installation or filter regulations from the first network element, wherein the control means can be implemented to decrypt the encrypted installation regulations or filter regulations to provide decrypted filter regulations to the filter means (120) or to adapt the filter means (120) based on decrypted installation regulations, respectively.

In embodiments the control means can be implemented to decrypt the encrypted installation regulation or the encrypted filter regulation according to a DSA method (DSA = digital signature algorithm). The filter means (120) may be implemented to obtain information about allowed transmitter addresses, receiver addresses, port numbers, used services or used communication protocols with the filter regulation and check the data packets with regard to this information.

The communication means (110) can be implemented to communicate with network elements of different subnetworks, and the filter means (120) can be implemented to receive different filter regulations for the different subnetworks and to monitor data packets at or from different subnetworks according to the different filter regulations.

In embodiments the mobile radio terminal device (100) may comprise a first processing unit for realizing the filter means (120) and at least one second processing unit for realizing an application, wherein the application can be implemented to exchange data packets via the filter means (120) and the communication means (110) with a network element. Embodiments may be realized as a pocket PC (PC = Personal Computer), a smart phone, a laptop computer or a PDA (PDA = Personal Digital Assistant). The filter means (120) can be implemented to monitor data packets according to Bluetooth, TCP (TCP = Transmission Control Protocol), IP (IP = Internet Protocol), UDP (UDP = Universal Datagram Protocol), GSM (GSM = Global System for Mobile communications), WLAN (WLAN = Wireless Local Area Network), DECT (DECT = Digital Enhanced Cordless Telephone), UMTS (UMTS = Universal Mobile Telecommunication System), LTE (LTE = Long Term Evolution).

In embodiments the peripheral device may include a camera which may be switched on and off based on the filter regulation. The control means can be implemented to further perform an authentication with the first network element and to accept neither installation regulations nor filter regulations for the first network element with a failed authentication. Embodiments may further comprise an interface for communicating with an administrator, wherein the administrator may be identified via an administrator password, and wherein the filter means (120) may be implemented to be activated or deactivated by the administrator.

The mobile radio terminal device (100) may further include an interface for representing at least a part of the filter regulation for a user of the mobile radio terminal device (100). The mobile radio terminal device (100) may further comprise a virus filter means for monitoring data packets based on a virus filter regulation. The virus filter means can be implemented to receive a virus filter regulation from the first network element. The filter means (120) may be implemented to receive a filter regulation in an XML-format (XML = extensible markup language). The control unit may be implemented to receive an installation regulation in a CAB format (CAB = cabinet).

Embodiments may comprise a network element (200) for the configuration of a filter means of a mobile radio terminal device, comprising a communication means (210) for communicating with the mobile radio terminal device via data packets and a filter configuration means (220) for providing a filter regulation such that the filter means may identify data packets which do not correspond to the filter regulation based on the filter regulation, the filter regulation being adapted for monitoring a use of a peripheral device or a further interface, wherein the communication means (210) is implemented to authenticate against the mobile radio terminal device and to transmit the filter regulation via the data packets to the mobile radio terminal device.

In embodiments the network element (200) may further comprise an interface for communicating with an administrator. The filter configuration means (220) can be implemented to provide the filter regulation for a filter means which realizes a firewall or a security gateway. The filter configuration means (220) can be implemented to provide an installation regulation for a filter means on the basis of which a software filter means may be installed in a mobile radio terminal device. Embodiments may comprise a means for encrypting the data packets. The network element (200) may manage a database for storing filter regulations, installation regulations or keys. The filter configuration means (220) can be implemented to provide an XML file as a filter regulation. The filter configuration means (220) is implemented to provide a CAB file as an installation regulation.

The filter configuration means (220) can be implemented to provide a plurality of filter rules as a filter regulation. The filter configuration means (220) can be implemented to provide information about allowed transmitter addresses, receiver addresses, port numbers, used services or used communication protocols with the filter regulation. The filter configuration means (220) may be implemented to provide filter regulations for Bluetooth, TCP, IP, UDP, GSM, WLAN, DECT, UMTS, LTE data packets. The database is implemented to store a history of filter regulations, installation regulations or keys for a mobile radio terminal device.

The means for encrypting and the filter configuration means (220) can be implemented to generate a key pair with an installation regulation or a filter regulation and to sign or to encrypt, respectively, the installation regulation or the filter regulation with the key pair. The means for encrypting is implemented to encrypt or to sign, respectively, according to the DSA method. Embodiments may further comprise a virus filter configuration means for providing a virus filter regulation, and the communication means (210) can be implemented to transmit the virus filter regulation via the data packets to the mobile radio terminal device.

Embodiments may comprise a mobile radio system having an embodiment of a mobile radio terminal device (100) and an embodiment of a network element (200) according to the above description.

Embodiments of the present invention thus offer the advantage that the management of personal firewalls as they may exist on mobile terminal devices may be performed in a centralized way by an administrator. Further, the management of peripheral devices, i.e. a control regarding the use of cameras and dictating functions of mobile terminal devices, may be shifted into the field of the administrator. By these mechanisms, embodiments of the present invention offer the possibilities to close security gaps which may be attributed to the mobility and the increasing functionality of mobile terminal devices.

It is in particular noted, that depending on the circumstances the inventive scheme may also be implemented in software. The implementation may be on a digital storage medium, in particular a floppy disc, a CD, a DVD etc. by means of electronically readable control signals which may cooperate with a programmable computer system so that the corresponding method is performed. In general, the invention thus also consists in a computer program product having a program code stored on a machine-readable carrier for performing the inventive method when the computer program product runs on a computer. In other words, the invention may thus be realized as a computer program having a program code for performing the method, when the computer program product runs on a computer.

## Claims

1. A mobile radio terminal device (100), comprising
a communication means (110) for communicating with network elements via data packets;
a control means which is implemented to perform an authentication with a first network element; and
a filter means (120) for monitoring the data packets, wherein the filter means (120) is implemented to receive a filter regulation from the first network element and to prevent a communication with a second network element, when a data packet for communicating with the second network element does not correspond to the filter regulation;
wherein the control means is implemented to accept no filter regulations from the first network element in a failed authentication; and wherein the mobile radio device (100) further comprises a peripheral device or an interface for a communication, and wherein the filter means (120) is implemented to monitor a use of the peripheral device or the interface based on the filter regulation.

2. The mobile radio terminal device (100) according to claim 1, wherein the filter means (120) is implemented to form a firewall or a security gateway for the data packets.

3. The mobile radio terminal device (100) according to one of claims 1 or 2, wherein the control means is implemented to receive an installation regulation from the first network element and to adapt the filter means (120) based on the installation regulation.

4. The mobile radio terminal device (100) according to one of claims 1 to 3, wherein the communication means (110) is implemented to communicate with network elements of different subnetworks, and wherein the filter means (120) is implemented to receive different filter regulations for the different subnetworks and to monitor data packets at or from different subnetworks according to the different filter regulations.

5. The mobile radio terminal device (100) according to one of claims 1 to 4, which is realized as a pocket PC (PC = Personal Computer), a smart phone, a laptop computer or a PDA (PDA = Personal Digital Assistant).

6. The mobile radio terminal device (100) according to one of the claims 1 to 5, wherein the peripheral device includes a camera which may be switched on and off based on the filter regulation.

7. A method for monitoring data packets, comprising the following steps:
authenticating a first network element;
receiving a filter regulation from the first network element, if the authentication succeeded;
checking data packets, which are exchanged with a second network element, based on the filter regulation;
discarding data packets, which do not correspond to the filter regulation; and
monitoring a use of a peripheral device or an interface for a communication based on the filter regulation.

8. A network element (200) for the configuration of a filter means of a mobile radio terminal device, comprising
a communication means (210) for communicating with the mobile radio terminal device via data packets; and
a filter configuration means (220) for providing a filter regulation such that the filter means may identify data packets which do not correspond to the filter regulation based on the filter regulation, the filter regulation being adapted for monitoring a use of a peripheral device or an interface for a communication,
wherein the communication means (210) is implemented to authenticate against the mobile radio terminal device and to transmit the filter regulation via the data packets to the mobile radio terminal device.

9. The network element (200) according to claim 8, further comprising an interface for communicating with an administrator.

10. The network element (200) according to one of claims 8 or 9, wherein the filter configuration means (220) is implemented to provide the filter regulation for a filter means which realizes a firewall or a security gateway.

11. The network element (200) according to one of claims 8 to 10, wherein the filter configuration means (220) is implemented to provide a plurality of filter rules as a filter regulation.

12. The network element (200) according to one of claims 8 to 11, wherein the filter configuration means (220) is implemented to provide information about allowed transmitter addresses, receiver addresses, port numbers, used services or used communication protocols with the filter regulation.

13. A method for the configuration of a filter means of a mobile radio terminal device, comprising the steps of:
communicating with the mobile radio terminal device via data packets;
authenticating against the mobile radio terminal device;
providing a filter regulation such that the filter means may identify data packets based on the filter regulation which do not correspond to the filter regulation and monitor a use of a peripheral device or an interface for a communication based on the filter regulation; and
transmitting the filter regulation to the mobile radio terminal device via the data packets.

14. A computer program having a program code for performing one of the methods according to claims 7 or 13, when the computer program runs on a computer.

15. A mobile radio system having a mobile radio terminal device (100) according to one of claims 1 to 6 and a network element (200) according to one of claims 8 to 12.

## Patentansprüche

1. Ein Mobilfunkendgerät (100), das folgende Merkmale aufweist:
eine Kommunikationseinrichtung (110) zum Kommunizieren mit Netzelementen über Datenpakete;
eine Steuereinrichtung, die implementiert ist, um eine Authentifizierung mit einem ersten Netzelement durchzuführen; und
eine Filtereinrichtung (120) zum Überwachen der Datenpakete, wobei die Filtereinrichtung (120) implementiert ist, um eine Filterregelung von dem ersten Netzelement zu empfangen, und um eine Kommunikation mit einem zweiten Netzelement zu verhindern, wenn ein Datenpaket zum Kommunizieren mit dem zweiten Netzelement nicht der Filterregelung entspricht;
wobei die Steuereinrichtung implementiert ist, um bei einer fehlgeschlagenen Authentifizierung keine Filterregelungen von dem ersten Netz anzunehmen; und wobei das Mobilfunkendgerät (100) ferner ein Peripheriegerät oder eine Schnittstelle für eine Kommunikation aufweist, und wobei die Filtereinrichtung (120) implementiert ist, um eine Verwendung des Peripheriegeräts oder der Schnittstelle basierend auf der Filterregelung zu überwachen.

2. Das Mobilfunkendgerät (100) gemäß Anspruch 1, bei dem die Filtereinrichtung (120) implementiert ist, um eine Firewall oder einen Sicherheitsnetzübergang für die Datenpakete zu bilden.

3. Das Mobilfunkendgerät (100) gemäß einem der Ansprüche 1 oder 2, bei dem die Steuereinrichtung implementiert ist, um eine Installationsreglung von dem ersten Netzelement zu empfangen, und um die Filtereinrichtung (120) basierend auf der Installationsregelung anzupassen.

4. Das Mobilfunkendgerät (100) gemäß einem der Ansprüche 1 bis 3, bei dem die Kommunikationseinrichtung (110) implementiert ist, um mit Netzelementen unterschiedlicher Teilnetze zu kommunizieren, und bei dem die Filtereinrichtung (120) implementiert ist, um unterschiedliche Filterregelungen für die unterschiedlichen Teilnetze zu empfangen, und um Datenpakete an oder von unterschiedlichen Teilnetzen gemäß den unterschiedlichen Filterregelungen zu überwachen.

5. Das Mobilfunkendgerät (100) gemäß einem der Ansprüche 1 bis 4, das als ein Taschen-PC (PC = Personalcomputer), ein Smartphone, ein Laptop-Computer oder ein PDA (PDA = Persönlicher Digitaler Assistent) realisiert ist.

6. Das Mobilfunkendgerät (100) gemäß einem der Ansprüche 1 bis 5, bei dem das Peripheriegerät eine Kamera umfasst, die basierend auf der Filterregelung ein- und ausgeschaltet werden kann.

7. Ein Verfahren zum Überwachen von Datenpaketen, das folgende Schritte aufweist:
Authentifizieren eines ersten Netzelements;
Empfangen einer Filterregelung von dem ersten Netzelement, falls die Authentifizierung erfolgreich war;
Prüfen von Datenpaketen, die mit einem zweiten Netzelement ausgetauscht werden, basierend auf der Filterregelung;
Verwerfen von Datenpaketen, die nicht der Filterregelung entsprechen; und
Überwachen einer Verwendung eines Peripheriegeräts oder einer Schnittstelle für eine Kommunikation basierend auf der Filterregelung.

8. Ein Netzelement (200) für die Konfiguration einer Filtereinrichtung eines Mobilfunkendgeräts, das folgende Merkmale aufweist:
eine Kommunikationseinrichtung (210) zum Kommunizieren mit dem Mobilfunkendgerät über Datenpakete; und
eine Filterkonfigurationseinrichtung (220) zum Bereitstellen einer Filterregelung, so dass die Filtereinrichtung Datenpakete, die nicht der Filterregelung entsprechen, basierend auf der Filterregelung identifizieren kann, wobei die Filterregelung angepasst ist zum Überwachen einer Verwendung eines Peripheriegeräts oder einer Schnittstelle für eine Kommunikation,
wobei die Kommunikationseinrichtung (210) implementiert ist zum Authentifizieren gegenüber dem Mobilfunkendgerät, und zum Senden der Filterregelung über die Datenpakete zu dem Mobilfunkendgerät.

9. Das Netzelement (200) gemäß Anspruch 8, das ferner eine Schnittstelle zum Kommunizieren mit einem Administrator aufweist.

10. Das Netzelement (200) gemäß einem der Ansprüche 8 oder 9, bei dem die Filterkonfigurationseinrichtung (220) implementiert ist, um die Filterregelung für eine Filtereinrichtung bereitzustellen, die eine Firewall oder einen Sicherheitsnetzübergang realisiert.

11. Das Netzelement (200) gemäß einem der Ansprüche 8 bis 10, bei dem die Filterkonfigurationseinrichtung (220) implementiert ist, um eine Mehrzahl von Filterregeln als eine Filterregelung bereitzustellen.

12. Das Netzelement (200) gemäß einem der Ansprüche 8 bis 11, bei dem die Filterkonfigurationseinrichtung (220) implementiert ist, um Informationen über erlaubte Senderadressen, Empfängeradressen, Tornummern, verwendete Dienste oder verwendete Kommunikationsprotokolle mit der Filterregelung bereitzustellen.

13. Ein Verfahren für die Konfiguration einer Filtereinrichtung eines Mobilfunkendgeräts, das folgende Schritte aufweist:
Kommunizieren mit dem Mobilfunkendgerät über Datenpakete;
Authentifizieren gegenüber dem Mobilfunkendgerät;
Bereitstellen einer Filterregelung, so dass die Filtereinrichtung basierend auf der Filterregelung Datenpakete identifizieren kann, die nicht der Filterregelung entsprechen, und eine Verwendung eines Peripheriegeräts oder einer Schnittstelle für eine Kommunikation basierend auf der Filterregelung überwachen kann; und
Senden der Filterregelung an das Mobilfunkendgerät über die Datenpakete.

14. Ein Computerprogramm mit einem Programmcode zum Durchführen von einem der Verfahren gemäß Anspruch 7 oder 13, wenn das Computerprogramm auf einem Computer läuft.

15. Ein Mobilfunksystem mit einem Mobilfunkendgerät (100) gemäß einem der Ansprüche 1 bis 6 und einem Netzelement (200) gemäß einem der Ansprüche 8 bis 12.

## Revendications

1. Dispositif de terminal radio mobile (100), comprenant
un moyen de communication (110) destiné à communiquer avec des éléments de réseau par l'intermédiaire de paquets de données;
un moyen de contrôle qui est mis en oeuvre pour effectuer une authentification auprès d'un premier élément de réseau; et
un moyen de filtrage (120) destiné à surveiller les paquets de données, où le moyen de filtrage (120) est mis en oeuvre pour recevoir un réglage de filtrage du premier élément de réseau et pour empêcher une communication avec un deuxième élément de réseau lorsqu'un paquet de données pour communiquer avec le deuxième élément de réseau ne correspond pas au réglage de filtrage;
dans lequel le moyen de contrôle est mis en oeuvre pour ne pas accepter de réglages de filtrage du premier élément de réseau en cas d'authentification échouée; et dans lequel le dispositif de radio mobile (100) comprend par ailleurs un dispositif périphérique ou une interface pour une communication, et dans lequel le moyen de filtrage (120) est mis en oeuvre pour surveiller une utilisation du dispositif périphérique ou de l'interface sur base du réglage de filtrage.

2. Dispositif de terminal radio mobile (100) selon la revendication 1, dans lequel le moyen de filtrage (120) est mis en oeuvre pour former un pare-feu ou une porte de sécurité pour les paquets de données.

3. Dispositif de terminal radio mobile (100) selon l'une des revendications 1 ou 2, dans lequel le moyen de contrôle est mis en oeuvre pour recevoir un réglage d'installation du premier élément de réseau et pour adapter le moyen de filtrage (120) sur base du réglage d'installation.

4. Dispositif de terminal radio mobile (100) selon l'une des revendications 1 à 3, dans lequel le moyen de communication (110) est mis en oeuvre pour communiquer avec des éléments de réseau de différents sous-réseaux, et dans lequel le moyen de filtrage (120) est mis en oeuvre pour recevoir différents réglages de filtrage pour les différents sous-réseaux et pour surveiller les paquets de données à ou de différents sous-réseaux selon les différents réglages de filtrage.

5. Dispositif de terminal radio mobile (100) selon l'une des revendications 1 à 4, qui est réalisé sous forme de PC de poche PC (PC = Personal Computer = Ordinateur Personnel), un téléphone à carte intelligente, un ordinateur portable ou un PDA (PDA = Personal Digital Assistant = Assistant Numérique de Poche).

6. Dispositif de terminal radio mobile (100) selon l'une des revendications 1 à 5, dans lequel le dispositif périphérique comporte une caméra qui peut être activée et désactivée sur base du réglage de filtrage.

7. Procédé pour surveiller des paquets de données, comprenant les étapes suivantes consistant à:
authentifier un premier élément de réseau;
recevoir un réglage de filtrage du premier élément de réseau si l'authentification est réussie;
vérifier les paquets de données qui sont échangés avec un deuxième élément de réseau, sur base du réglage de filtrage;
éliminer les paquets qui ne correspondent pas au réglage de filtrage; et
surveiller une utilisation d'un dispositif périphérique ou d'une interface pour une communication sur base du réglage de filtrage.

8. Elément de réseau (200) pour la configuration d'un moyen de filtrage d'un dispositif de terminal radio mobile, comprenant
un moyen de communication (210) destiné à communiquer avec le dispositif de terminal radio mobile par l'intermédiaire de paquets de données; et
un moyen de configuration de filtrage (220) destiné à fournir un réglage de filtrage tel que le moyen de filtrage puisse identifier les paquets de données qui ne correspondent pas au réglage de filtrage, sur base du réglage de filtrage, le réglage de filtrage étant adapté pour surveiller une utilisation d'un dispositif périphérique ou d'une interface pour une communication,
dans lequel le moyen de communication (210) est mis en oeuvre pour authentifier par rapport au dispositif de terminal radio mobile et pour transmettre le réglage de filtrage par l'intermédiaire des paquets de données au dispositif de terminal radio mobile.

9. Elément de réseau (200) selon la revendication 8, comprenant par ailleurs une interface pour communiquer avec un administrateur.

10. Elément de réseau (200) selon l'une des revendications 8 ou 9, dans lequel le moyen de configuration de filtrage (220) est mis en oeuvre pour fournir le réglage de filtrage pour un moyen de filtrage qui réalise un pare-feu ou une porte de sécurité.

11. Elément de réseau (200) selon l'une des revendications 8 à 10, dans lequel le moyen de configuration de filtrage (220) est mis en oeuvre pour fournir une pluralité de règles de filtrage comme réglage de filtrage.

12. Elément de réseau (200) selon l'une des revendications 8 à 11, dans lequel le moyen de configuration de filtrage (220) est mis en oeuvre pour fournir des informations sur les adresses d'émetteur admises, les adresses de récepteur admises, les numéros de porte, les services utilisés ou les protocoles de communication utilisés avec le réglage de filtrage.

13. Procédé de configuration d'un moyen de filtrage d'un dispositif de terminal radio mobile, comprenant les étapes consistant à:
communiquer avec le dispositif de terminal radio mobile par l'intermédiaire de paquets de données;
authentifier par rapport au dispositif de terminal radio mobile;
fournir un réglage de filtrage tel que le moyen de filtrage puisse identifier sur base du réglage de filtrage les paquets de données qui ne correspondent pas au réglage de filtrage et surveiller une utilisation d'un dispositif périphérique ou d'une interface pour une communication sur base du réglage de filtrage; et
transmettre le réglage de filtrage au dispositif de terminal radio mobile par l'intermédiaire des paquets de donnée.

14. Programme d'ordinateur présentant un code de programme pour réaliser l'un des procédés selon les revendications 7 ou 13 lorsque le programme d'ordinateur est exécuté sur un ordinateur.

15. Système de radio mobile présentant un dispositif de terminal radio mobile (100) selon l'une des revendications 1 à 6 et un élément de réseau (200) selon l'une des revendications 8 à 12.
